# EUROPEAN PATENT SPECIFICATION

(11) **EP 0 507 804 B1**
(45) Date of publication and mention of the grant of the patent: **31.07.1996**
(21) Application number: 91901296.3
(22) Date of filing: 27.12.1990
(51) Int. Cl.: C08F 4/02, C08F 4/626, C08F 4/646

(54) **PROCESS FOR PREPARATION OF A PROCATALYST COMPOSITION FOR POLYMERIZATION OF OLEFINS AND USE OF THE COMPOSITION**
VERFAHREN ZUR DARSTELLUNG EINER PROKATALYTISCHEN ZUSAMMENSETZUNG ZUR POLYMERISATION VON OLEFINEN UND VERWENDUNG DIESER ZUSAMMENSETZUNG
PROCEDE DE PREPARATION D'UNE COMPOSITION PROCATALYTIQUE DESTINEE A LA POLYMERISATION DES OLEFINES, ET UTILISATION DE LA COMPOSITION

(30) Priority: 28.12.1989 FI 896323
(43) Date of publication of application: 14.10.1992
(73) Proprietor: BOREALIS A/S, DK-2800 Lyngby (DK)
(72) Inventor: ANDELL, Ove, SF-00960 Helsinki (FI)
(74) Representative: Loesenbeck, Karl-Otto, Dipl.-Ing.
(86) International application number: FI9000314
(87) International publication number: WO9109881

(56) References cited:
- EP-A- 0 123 510
- EP-A- 0 356 183
- US-A- 4 404 343
- US-A- 4 530 913

## Description

The invention relates to a process for preparation of a procatalyst composition for polymerization of olefins, wherein a metal-containing complex compound or mixture of compounds is applicated into a porous particulate carrier and chlorinated with a suitable chlorinating agent. The invention also relates to the use of such a procatalyst composition together with a co-catalyst for polymerization or co-polymerization of olefins.

In polymerization of olefins Ziegler-Natta catalyst system generally is used consisting of a so called procatalyst and a co-catalyst. The procatalyst is a component based on a compound of a transition metal belonging to some of the groups IVB-VIII of the periodic system of the elements. The co-catalyst in turn is a component based on an organic metal compound of a metal belonging to some of the groups IA-IIIA of the periodic system of the elements. The catalyst system usually also contains electron donating compounds which improve and modify the catalytical properties.

It is known to make use in the preparation of heterogenic polymerization catalysts as a component enhancing the polymerization activity of the procatalysts a carrier compound, on which the transition metal is superposed. The usual carrier compounds are based on silica, aluminum oxide, magnesium oxide, titanium oxide, a mixture thereof, carbon in different forms, and different types of polymers. Important carrier compounds also include magnesium compounds such as alkoxides, hydroxides, hydroxy halides and halides, especially magnesium chloride.

Since the magnesium compounds and in particular magnesium halides are not activated very efficiently in their base crystal form with a transition metal compound their crystal form has to be deformed. Traditionally the deformation of the crystal structure has been carried out by grinding, for example, in a ball mill resulting in a finely divided powder with strongly deformed crystal lattices. Drawbacks include, anyhow, that the grinding is very energy consuming, causes wearing and corrosion of the apparatus, and is suited to the production of catalyst only with the tedious batch process.

An alternative method for obtaining a deformed or amorphous crystal structure of a magnesium compound is to superpose the magnesium compound, the transition metal compound and optionally an electron donor into an essentially inert carrier. Such a process is explained, for example, in U.S. Patent No. 4,363,746, where in one embodiment untreated silica is reacted with a complex of magnesium chloride and a transition metal alcoholate, the obtained product is reacted with an organic aluminum compound such as an organic aluminum halide, and finally the obtained solid intermediate is activated with a transition metal halide.

Same kind of technique is represented in U.S. Patent No. 4,391,736, which relates to removing of the hydroxy groups of a silica-type carrier by organic metal compounds such as an organic aluminum halide, reacting the obtained carrier containing no hydroxyls with a magnesium dihalide tetraalkyl titanate complex and activating of the obtained solid reaction product with titanium tetrahalide, and WO Patent Application No. 89/02446, which relates to the same type of process, wherein the surface hydroxy groups of silica are removed with the aid of a halide or an organic silicon compound.

The mentioned three specifications describe the preparation of a solid procatalyst composition in two titanation steps. These steps are very difficult and e.g. sensitive to impurities.

A third method to provide a deformed crystal structure of magnesium compounds such as a magnesium halide and thereby to add its capability to become activated by transition metal compounds is to modify it chemically. Then a magnesium compound, an electron donor and a transition metal compound are reacted with each other, often in solution, to a procatalyst composition which is separated. The composition is easily precipitated, but a drawback is that the morphology of the composition is difficult to control.

An example of the above method is Japanese Patent No. 88/69806, which describes the forming from magnesium and titanium alkoxides of a homogenic hydrocarbon solution where magnesium and titanium are present as a soluble complex. When a chlorinating agent, i.e. silicon tetrachloride, is added to the solution a procatalyst is separated from the composition as a solid product. In U.S. Patent No. 4,804,726 a similar method is described where a homogenic hydrocarbon solution is formed containing alcohol, iodine, magnesium added as metallic, and titanium alkoxide. As a chlorination agent an organic aluminum chloride is used which provides the separation of the procatalyst composition as a solid product.

In some patents of which as an example U.S. Patent No. 4,783,512 can be mentioned, a method is described wherein a hydrocarbon solution containing magnesium, aluminum and alcohol is first formed. To this solution titanium tetrabutoxide and thereafter ethylaluminum sesquichloride is added. As a result a suspensed product is obtained which is suitable as a catalyst for polymerization of ethylene. A separate carrier is then not needed in this process, nor in the previous methods based on chemical modifying.

The US patent 4 530 913 describes a process for the preparation of a catalyst for the polymerization of olefins, in which a silica or alumina carrier is impregnated with reactive magnesium, aluminum and titatium compounds one by one at consecutive impregnation steps. Chlorine may be included in some of the reacting metal compounds. The drawback of this process is that the impregnation steps are timeconsuming, each requiring a reaction time of at least half an hour.

In the US patent 4 404 343 there is disclosed a process in which a particulate organic carrier is treated with an alkyl aluminum halide, a magnesium compound and a titanium alkoxide or halide. The components are added to the carrier at separate consecutive steps.

The purpose of this invention is to provide a process, whereby the previously mentioned type of procatalyst composition comprising magnesium, titanum and aluminum can be prepared even more simply than before by applying the composition on a porous particulate carrier. The process according to the invention is characterized in that magnesium or its compound, a titanium compound, aluminum or its compound and a compound comprising a hydroxyl group, are reacted with each other so that an alkoxide or alkylalkoxide solution containing said metals in an inert solvent is obtained, which solution is impregnated in a single step into a carrier, whereafter extra solvent is removed and the impregnated carrier thus obtained is treated with the said suitable chlorination agent.

Above all the process according to the invention has as advantage the simplicity of the preparation of the composition. The impregnating solution can be prepared simply by mixing the components of the solution with each other at room temperature. The impregnating does not need special procedures, and because the extra solvent can be collected and reused, the process will not produce any kind of waste either.

The invention is essentially based on the observation that the components contained in the procatalyst composition can be brought as a stable alkoxide or alkylalkoxide complex by simple mixing into a low viscosity solution. The solution can be prepared e.g. by adding to an aluminum compound which has been dissolved to an inert solvent a compound comprising a hydroxyl group such as an alcohol and the other of the two mentioned metallic compounds and by adding thereafter to the obtained solution the other of the mentioned other metallic compounds. The order of addition can, anyhow, be whatever provided that the titanium compound is not reduced during the process. E.g., if an aluminum compound such as triethylaluminum or a magnesium compound such as butyloctylmagnesium is added after the titanium compound, the compound comprising a hydroxyl group must be added to the solution before the aluminum or magnesium compound.

The experiments performed show that the ethylene polymerization activity of a procatalyst composition prepared according the invention is high compared with the catalysts known before where the carrier has been silica. The composition in particle form prepared according to the invention has excellent morphology, as has the polyethylene obtained in the polymerization.

The carrier used according to the invention can essentially be of whatever porous inorganic or organic material consisting of finely divided particles. Most preferred are anyhow inorganic oxides such as silicon oxide, aluminum oxide, magnesium oxide or titanium oxide from which the free hydroxyl groups on the surface have been removed thermally and/or chemically.

The thermal treatment is by lower temperatures directed to removal of water and by higher temperatures to calcination of surface hydroxyls. The thermal treatment is preferably carried out at a temperature of 150-1000°C.

The chemical removal of surface hydroxyl groups of a carrier can be conducted by using materials reacting with hydroxyl groups. Such materials include organic silicon, aluminum, zinc, phosphorus and/or fluorine compounds. As an example of the preferred organic silicon compounds hexamethyldisilazane and as an example of the preferred organic aluminum compounds triethylaluminum can be mentioned.

The magnesium compound used in the process according to the invention can be an organic magnesium compound such as a magnesium alkyl, alkoxide or alkylalkoxide, e.g. butyloctylmagnesium, the titanium compound can be a titaniumalkoxide such as titanium butoxide, the aluminum compound can be an organic aluminum compound such as aluminumalkyl, alkoxide or oxane, e.g. triethylaluminum or tetraisobutylaluminiumoxane, and the compound comprising a hydroxyl group which forms alkoxides can be an alcohol such as ethanol or 1-butanol.

The inert solvent used according to the invention is preferably a hydrocarbon such as, e.g., pentane or heptane or a mixture thereof. The removal of the solvent after the impregnating stage can be performed simply by evaporation.

In the chlorination step, following the impregnation of the carrier particles, as chlorinating agent can preferably be used e.g. a suitable organic aluminumchloride such as ethylaluminumsesquichloride. Chlorine compounds containing silicon or phosphorus, hydrogen chloride or gaseous chlorine are also possible. The chlorine-containing titanium compounds used earlier are not necessarily needed in the process according to the invention.

The invention also relates to the use of a procatalyst composition prepared according to the above process together with a co-catalyst for polymerization or co-polymerization of olefins such as ethylene. As suitable co-catalysts organic aluminum compounds such as, e.g., triethylaluminum can be mentioned.

The invention is explained in the following in more detail through performing examples.

In these examples the used polymerization process and pre-treatment of the carrier before the impregnating are explained. Then follow the examples of preparation of the procatalyst composition and its use in polymerization of ethylene, the results of which are represented in table 1 following the examples.

### Polymerization procedure

I. A 3 L reactor was purged with an inert gas-flow (nitrogen or argon) and it was charged with 2.1 L of n-pentane. To this 20-50 mg of procatalyst was added as a slurry in 20 mL of n-pentane with mixing from a to 3 bars pressurized feeding funnel. The temperature was thereafter raised to 90°C and was kept there during the hole polymerization process.

A 500 mL vessel was pressurized with hydrogen to a pressure of 5 bars. Hydrogen and a 10 wt-% solution of triethylaluminum in pentane as co-catalyst and ethylene gas were fed into the reactor. The total pressure was raised to 15 bars and was kept there by a continuous feed of ethylene gas. The polymerization was continued for 1 hr.

1 ppm antioxidant was added to the slurry of polyethylene and pentane, and pentane was evaporated on standing of the slurry.

II. The copolymerization of ethylene and α-olefins was performed according to step I above. The reactor was charged with 1800 mL of n-pentane and after the addition of the catalyst slurry 300 mL of 4-methyl-1-pentene acting as a co-monomer was added.

### Pre-treatment of the carrier

A. 1.38 mL of hexamethyldisilazane was added with stirring at room temperature to a slurry of 10.6 g silica (W. R. Grace & Co., Davison Grade 955, dehydrated and calcinated at a temperature of 600°C) in 80 mL of heptane. The slurry was kept with stirring at a temperature of 90°C for 1 hr, and the solvent was then removed by purging with a stream of nitrogen for 2.5 hrs and by raising the temperature during this time in stages to 110°C. The obtained product was a dry free flowing white powder.

B. 1.88 mL of hexamethyldisilazane was added with stirring at room temperature to a slurry of 10.0 g silica (dehydrated and calcinated at a temperature of 600°C) in 80 mL of heptane. The slurry was kept with stirring at a temperature of 90°C for 1 hr, and the solvent was then removed by purging with a stream of nitrogen for 2.5 hrs and by raising the temperature during this time in stages to 110°C. The obtained product was a dry free flowing white powder.

C. 1.01 mL of hexamethyldisilazane was added with stirring at room temperature to a slurry of 10.8 g silica (dehydrated and calcinated at a temperature of 800°C) in 80 mL of heptane. The slurry was kept with stirring at a temperature of 90°C for 1 hr, and the solvent was then removed by purging with a stream of nitrogen for 2.5 hrs and by raising the temperature during this time in stages to 110°C. The obtained product was a dry free-flowing white powder.

D. 4.5 mL of hexamethyldisilazane was added with stirring at room temperature to a slurry of 10.0 g of undehydrated silica in 50 mL of pentane. The slurry was kept with stirring at a temperature of 30°C, and the solvent was then removed by purging with a stream of nitrogen for 2.5 hrs and by raising the temperature during this time in stages to 110°C. The obtained product was a dry free-flowing white powder.

E. 8.55 mL of triethylaluminum was added with stirring at room temperature to a slurry of 10.0 g silica (dehydrated and calcinated with a peak temperature of 600°C) in 80 mL of pentane. The slurry was stirred further at room temperature for the following 3 hrs. The solvent was removed thereafter by purging it with dry nitrogen and by raising the temperature during this time in stages to 80°C.

Preparation of the procatalyst composition and polymerization experiments

### Example 1

### 1a. Preparation of Mg[Al(OBU)₄]₂

A 50 mL sealed bottle equipped with a magnetic stirrer was charged with 17.8 mL of a 10 wt% solution of triethylaluminum in pentane, to which 3.66 mL of 1-butanol was added at room temperature over a period of 30 min. Thereafter 5.71 ml of a 20 wt% solution of butyloctylmagnesium in heptane was added at a temperature of 5°C over a period of 20 min. The total volume of the solution obtained was corrected to 30 mL by addition of heptane.

### 1b. Impregnating of the carrier

A 50 mL sealed bottle equipped with a magnetic stirrer was charged with 2.00 g of silica treated with hexamethyldisilazane according to step A, to which 10 mL of pentane, 6.0 mL of a solution prepared according to step la and 0.343 mL of titaniumtetrabutoxide was added, and the slurry was stirred at room temperature for 15 min before drying of the bottle by purging with a stream of argon over 2.75 hrs at a temperature of at most 80°C. As result a dry white free flowing powder was obtained.

### 1c. Chlorination step

A 30 mL sealed bottle equipped with a magnetic stirrer was charged with 0.50 g of the powder prepared according to step 16, and with 4.0 mL of pentane. 1.9 mL of a 10 wt% solution of ethylaluminumsesquichloride in pentane was added, and the slurry was stirred at room temperature for 1 hr. Thereafter the solvent was removed by purging the bottle with a stream of argon for 45 min and by raising the temperature during this time in stages to 80°C. As result a free flowing pale orange-brown powder was obtained. Elemental analysis of the powder revealed 5.6 % Al, 9.0 % Cl, 0.77 % Mg and 1.1 % Ti.

### 1d. Test polymerization

Ethylene was polymerized according to step I above using 100 mg of the powder prepared according to step 1c and 5.0 mL of a 10% solution of triethylaluminum in pentane as a co-catalyst. The results of the polymerization are shown in the table below.

### Example 2

### 2a. Preparation of the solution

A sealed 50 mL bottle equipped with a magnetic stirrer was charged with 10.67 mL of a 10 wt% solution of triethylaluminum in pentane and with 3.43 mL of a 20 wt% solution of butyloctylmagnesium in heptane. 1.40 mL of ethanol was added at room temperature over a period of 30 min. To the solution obtained 0.343 mL titaniumtetrabutoxide was added, which likewise was completely solved.

### 2b. Impregnating of the carrier

A 50 mL sealed bottle equipped with a magnetic stirrer was charged with 2.0 g of silica which had been treated with hexamethyldisilazane and 10 mL of pentane. The solution prepared according to step 2a was added and the slurry was stirred at room temperature for 15 min before drying the bottle by purging through it a stream of argon for 2.75 hrs, during which time the temperature was raised in steps to 80°C. As result a dry free flowing white powder was obtained.

### 2c. Chlorination step

A sealed 30 mL bottle equipped with a magnetic stirrer was charged with 0.50 g of the powder prepared according to step 2b and 4.0 mL of pentane. 2.6 mL of a 10 wt% solution of ethylaluminumsesquichloride in pentane was added, and the slurry was stirred at room temperature for 2 hrs. Thereafter the solvent was removed by purging with gas for 45 min, during which time the temperature was gradually raised to 80°C. As result a free flowing pale orange-brown powder was obtained. Elemental analysis of the powder revealed 8.5 % Al, 11.2 % Cl, 1.5 % Mg and 1.1 % Ti.

### 2d. Test polymerization

Ethylene was polymerized according to the method of step I using 50 mg of the powder prepared according to step 2c and 2.5 mL of a 10% solution of triethylaluminum in pentane as a co-catalyst. The results of the polymerization are showed in the table below.

### Example 3

### 3a. Preparation of the solution

A sealed 50 mL bottle equipped with a magnetic stirrer was charged with 8.89 mL of a 10 wt% solution of triethylaluminum in pentane, and to this 2.29 mL of 1-butanol was added at room temperature over a period of 30 min. 1.71 mL of titaniumtetrabutoxide was added and thereafter 5.71 mL of a 20 wt% solution of butyloctylmagnesium in heptane at a temperature of 5°C:n over a period of 20 min. The volume of the obtained solution was added to 20 mL by addition of heptane.

### 3b. Impregnation of the solution to the carrier

A sealed 50 mL bottle equipped with a magnetic stirrer was charged with 2.00 g of silica treated with hexamethyldisilazane according to step A. 4.0 ml of the solution prepared according to step 3a was added and the slurry was stirred at room temperature for 15 min before drying over a period of 2.75 hrs by purging with a stream of argon, during which time the temperature was raised in steps to 80°C. As result a dry free flowing white powder was obtained.

### 3c. Chlorination step

A sealed 30 mL bottle equipped with a magnetic stirrer was charged with 0.50 g of powder prepared according to step 3b and 4.0 mL of pentane. 1.9 ml of ethylaluminumsesquichloride was added and the slurry was stirred at room temperature for 1 hr. Thereafter the solvent was removed under a period of 45 min by purging with a stream of argon, during which time the temperature was raised in steps to 80°C. As result a free flowing pale orange-brown powder was obtained. Elemental analysis of the powder revealed 5.5 % Al, 9.3 % Cl, 0.95 % Mg and 1.7 % Ti.

### 3d. Test polumerization

Ethylene was polymerized according to the method described above in step I using 100 mg of the powder prepared according to step 3c and 5.0 mL of a solution of triethylaluminum in pentane as co-catalyst. The results of the polymerization are shown in the table below.

### 3f. Test polymerization

Ethylene was polymerized using as procatalyst 100 mg of the powder prepared according to step 3c and as co-catalyst 5.0 mL of a 10% solution of triethylaluminum in pentane. The polymerization was carried out according to the procedure described in step I above except that the hydrogen pressure in the 500 mL vessel was 10 bars. The results of the polymerization are shown in the table below.

### 3g. Test polymerization

Ethylene and 4-methyl-1-pentene were co-polymerized according to the procedure described in step II above using 100 mg of the powder prepared according to step 3c and as a co-catalyst 5.0 mL of a 10% solution of triethylaluminum in pentane. The results of the polymerization are shown in the table below.

### Example 4

### 4a. Preparation of the solution

A 100 mL bottle equipped with a magnetic stirrer was charged with 10.0 mL of heptane and with 5.95 mL of 1-butanol. 26.7 mL of a 10% solution of triethylaluminum in pentane was added at room temperature over a period of 30 min. 1.71 mL of titaniumtetrabutoxide was added to the solution followed by 11.4 mL of a 20 wt% solution of butyloctylmagnesium in heptane at a temperature of 5°C over a period of 20 min. The volume of the obtained solution was raised to 60 mL by addition of heptane.

### 4b. Impregnation of the solution to the carrier

A sealed 50 mL bottle equipped with a magnetic stirrer was charged with 2.00 g of silica which was treated with hexamethyldisilazane according to step A, and with 10 mL of pentane. 12.0 mL of the solution prepared according to step 4a was added and the slurry was stirred at room temperature for 15 min before drying for 2.75 hrs by purging with a stream of argon, during which time the temperature was raised in steps to 110°C. As result a dry free flowing white powder was obtained.

### 4c. Chlorination step

A sealed 30 mL bottle equipped with a magnetic stirrer was charged with 0.50 g of the powder prepared according to step 4b, and 4.0 mL of pentane. 2.52 mL of ethylaluminumsesquichloride was added and the slurry was stirred at room temperature for 1 hr. Thereafter the solvent was removed during 1.5 hrs by purging with a stream of argon, during which time the temperature was raised in steps to 80°C. As result a free flowing pale orange-brown powder was obtained. Elemental analysis of the powder revealed 7.6 % Al, 11.4 % Cl, 1.1 % Mg and 0.97 % Ti.

### 4d. Test polymerization

Ethylene was polymerized according to to the procedure described in step I above using 100 mg of the powder prepared according to step 4c and as a co-catalyst 5.0 mL of a 10% solution of triethylaluminum in pentane. The results of the polymerization are shown in the table below.

### Example 5

### 5a. Preparation of the solution

A 50 mL bottle equipped with a magnetic stirrer was charged with 8.89 mL of a 10% solution of triethylaluminum in pentane, and 1.92 mL of 1-butanol was added at room temperature over a period of 30 min. 0.343 mL of titaniumtetrabutoxide was added to the solution, and thereafter 3.43 mL of a 20 wt% solution of butyloctylmagnesium in heptane at a temperature 5°C over a period of 20 min. As result a homogenous solution was obtained.

### 5b. Impregnation of the solution to the carrier

A sealed 50 mL bottle equipped with a magnetic stirrer was charged with 2.00 g of silica treated with hexamethyldisilazane according to step A, and with 8 mL of pentane. The solution prepared according to step 5a was added and the slurry was stirred at room temperature for 15 min before drying for 2.5 hrs by purging with a stream of nitrogen, during which time the temperature was raised in steps to 80°C. As result a dry free flowing white powder was obtained.

### 5c. Chlorination step

A sealed 30 mL bottle equipped with a magnetic stirrer was charged with 0.50 g of powder prepared according to step 5b, and with 4.0 mL of pentane. 2.31 mL of ethylaluminumsesquichloride was added and the slurry was stirred at room temperature for 2 hrs. Thereafter the solvent was removed during 1.5 hrs by purging with a stream of nitrogen, during which time the temperature was raised in steps to 80°C. As result a free flowing pale orange-brown powder was obtained. Elemental analysis of the powder revealed 8.5 % Al, 11.5 % Cl, 1.3 % Mg and 0.9 % Ti.

### 5d. Test polymerization

Ethylene was polymerized according to step I above using 50 mg of the powder prepared according to step 5c and as a co-catalyst 2.5 mL of a 10 wt% solution of triethylaluminum in pentane. The results of the polymerization are shown in the table below.

### Example 6

### 6a. Impregnation of the solution to the carrier

A sealed 50 mL bottle equipped with a magnetic stirrer was charged with 2.00 g of silica treated with hexamethyldisilazane according to step C, and with 8 mL of pentane. The solution prepared according to step 5a was added and the slurry was stirred at room temperature for 15 min before drying for 2.5 hrs by purging with a stream of argon, during which time the temperature was raised in steps to 80°C. As result a dry free flowing white powder was obtained.

### 6b. Chlorination step

A sealed 30 mL bottle equipped with a magnetic stirrer was charged with 0.50 g of the powder prepared according to step 6a, and with 4.0 mL of pentane. 2.78 mL of ethylaluminumsesquichloride was added and the slurry was stirred at room temperature for 2 hrs. Thereafter the solvent was removed during 1.5 hrs by purging with a stream of nitrogen, during which time the temperature was raised in steps to 80°C. As result a free flowing pale orange-brown powder was obtained. Elemental analysis of the powder revealed 9.2 % Al, 12.0 % Cl, 1.3 % Mg and 0.85 % Ti.

### 6c. Test polymerization

Ethylene was polymerized according to the procedure described above in step I using 50 mg of the powder prepared according to step 6b and as co-catalyst 2.5 mL of a 10% solution of triethylaluminum in pentane. The results of the polymerization are shown in the table below.

### Example 7

### 7a. Impregnation of the solution to the carrier

A sealed 50 mL bottle equipped with a magnetic stirrer was charged with 2.00 g of silica treated with hexamethyldisilazane according to step A, and with 8 mL of pentane. The solution prepared according to step 5a was added and the slurry was stirred at room temperature for 15 min before drying for 2.5 hrs by purging with a stream of argon, during which time the temperature was raised in steps to 80°C. As result a dry free flowing white powder was obtained.

### 7b. Chlorination step

A sealed 30 mL bottle equipped with a magnetic stirrer was charged with 0.50 g of the powder prepared according to step 7a, and with 4.0 mL of pentane. 2.38 mL of ethylaluminumdichloride was added and the slurry was stirred at room temperature for 2 hrs. Thereafter the solvent was removed during 1.5 hrs by purging with a stream of nitrogen, during which time the temperature was raised in steps to 80°C. As result a free flowing pale orange-brown powder was obtained. Elemental analysis of the powder revealed 7.9 % Al, 14.3 % Cl, 1.4 % Mg and 0.85 % Ti.

### 7c. Test polymerization

Ethylene was polymerized according to the procedure described above in step I using 30 mg of the powder prepared according to step 7b and as a co-catalyst 1.5 mL of a 10% solution of triethylaluminum in pentane. The results of the polymerization are shown in the table below.

### Example 8

### 8a. Preparation of the catalyst

The method of example 7 was followed using the carrier prepared according to step E. As result a free flowing pale orange-brown powder was obtained. Elemental analysis of the powder revealed 9.0 % Al, 15.7 % Cl, 1.2 % Mg and 0.87 % Ti.

### 8b. Test polymerization

Ethylene was polymerized according to the procedure described above in step I using 31 mg of the powder prepared according to step 8a and as a co-catalyst 1.6 mL of a 10% solution of triethylaluminum in pentane. The results of the polymerization are shown in the table below.

### Example 9

### 9a. Preparation of the catalyst

The method of example 7 was followed using the carrier prepared according to step B. As result a free flowing pale orange-brown powder was obtained. Elemental analysis of the powder revealed 8.9 % Al, 15.6 % Cl, 1.4 % Mg and 1.0 % Ti.

### 9b. Test polymerization

Ethylene was polymerized according to the procedure described above in step I using 30 mg of the powder prepared according to step 9a and as a co-catalyst 1.5 mL of a 10% solution of triethylaluminum in pentane. The results of the polymerization are shown in the table below.

### Example 10

### 10a. Impregnation of the solution to the carrier

A sealed 50 mL bottle equipped with a magnetic stirrer was charged with 2.00 g of silica treated with hexamethyldisilazane according to step B, and with 8 mL of pentane. The solution prepared according to step 5a was added and the slurry was stirred at room temperature for 15 min before drying for 2.5 hrs by purging with a stream of nitrogen, during which time the temperature was raised in steps to 80°C. As result a dry free flowing white powder was obtained.

### 10b. Chlorination step

A sealed 30 mL bottle equipped with a magnetic stirrer was charged with 0.50 g of the powder prepared according to step 10a, and with 4.0 mL of pentane. 2.27 mL of diethylaluminumchloride was added and the slurry was stirred at room temperature for 2 hrs. Thereafter the solvent was removed during 1.5 hrs by purging with a stream of nitrogen, during which time the temperature was raised in steps to 80°C. As result a free flowing pale orange-brown powder was obtained. Elemental analysis of the powder revealed 8.6 % Al, 7.6 % Cl, 1.0 % Mg and 0.86 % Ti.

### 10c. Test polymerization

Ethylene was polymerized according to the procedure described above in step I using 30 mg of the powder prepared according to step 10b and as a co-catalyst 1,5 mL of a 10% solution of triethylaluminum in pentane. The results of the polymerization are shown in the table below.

### Example 11

### 11a. Preparation of the catalyst

The method of example 7 was followed using the carrier prepared according to step D. As result a free flowing pale orange-brown powder was obtained. Elemental analysis of the powder revealed 8.8 % Al, 15.6 % Cl, 1.3 % Mg and 0.83 % Ti.

### 11b. Test Polymerization

Ethylene was polymerized according to the procedure described above in step I using 32 mg of the powder prepared according to step lla and as a co-catalyst 1,6 mL of a 10% solution of triethylaluminum in pentane. The results of the polymerization are shown in the table below.

### Example 12

### 12a. Preparation of the solution

A 50 mL bottle equipped with a magnetic stirrer was charged with 7.85 mL of a 10% solution of triethylaluminum in pentane and 1.09 mL of ethanol was added at room temperature durind 30 min. 0.303 mL of titaniumtetrabutoxide was added to the solution and thereafter 3.03 mL of a 20 wt% solution of butyloctylmagnesium in heptane at a temperature of 5°C during 20 min. As result a homogenous solution was obtained.

### 12b. Impregnation of the solution to the carrier

A sealed 50 mL bottle equipped with a magnetic stirrer was charged with 1.76 g of silica treated with hexamethyldisilazane according to step A, and with 8 mL of pentane. A solution prepared according to the procedure of step 12a was added and the slurry was stirred at room temperature for 15 min before drying for 2.5 hrs by purging with a stream of nitrogen, during which time the temperature was raised in steps to 80°C. As result a dry free flowing white powder was obtained.

### 12c. Chlorination step

A sealed 30 mL bottle equipped with a magnetic stirrer was charged with 0.50 g of the powder prepared according to step 12b, and with 4.0 mL of pentane. 2.78 mL of ethylaluminumsesquichloride was added and the slurry was stirred at room temperature for 2 hrs. Thereafter solvent was removed during 1.5 hrs by purging with a stream of nitrogen, during which time the temperature was raised in steps to 80°C. As result a free flowing pale orange-brown powder was obtained. Elemental analysis of the powder revealed 8.3 % Al, 16.8 % Cl, 1.6 % Mg and 1.1 % Ti.

### 12d. Test polymerization

Ethylene was polymerized according to the procedure described above in step I using 50 mg of the powder prepared according to step 12c and as a co-catalyst 2.5 mL of a 10% solution of triethylaluminum in pentane. The results of the polymerization are shown in the table below.

### Example 13

### 13a. Preparation of the solution

A 50 mL bottle equipped with a magnetic stirrer was charged with 12.4 mL of a 10% solution of triethylaluminum in pentane, and 2.65 mL of 1-butanol was added at room temperature during 30 min. 0.343 mL of titaniumtetrabutoxide was added to the solution and thereafter 4.57 mL of a 20 wt% solution of butyloctylmagnesium in heptane at a temperature of 5°C during 20 min. As result a homogenous solution was obtained.

### 13b. Impregnation of the solution to the carrier

A sealed 50 mL bottle equipped with a magnetic stirrer was charged with 2.50 g of silica treated with hexamethyldisilazane according to step A, and with 8 mL of pentane. The solution prepared according to step 13a was added and the slurry was stirred at room temperature for 15 min before drying for 2.5 hrs by purging with a stream of nitrogen, during which time the temperature was raised in steps to 80°C. As result a dry free flowing white powder was obtained.

### 13c. Chlorination step

A sealed 30 mL bottle equipped with a magnetic stirrer was charged with 0.50 g of the powder prepared according to step 13b, and with 4.0 mL of pentane. 2.22 mL of ethylaluminumdichloride was added and the slurry was stirred at room temperature for 2 hrs. Thereafter the solvent was removed during 1.5 hrs by purging with a stream of nitrogen, during which time the temperature was raised in steps to 80°C. As result a free flowing pale orange-brown powder was obtained. Elemental analysis of the powder revealed 7.9 % Al, 13.4 % Cl, 1.4 % Mg and 0.61 % Ti.

### 13d. Test Polymerization

Ethylene was polymerized according to the procedure described above in step I using 50 mg of the powder prepared according to step 13c and as a co-catalyst 2.5 mL of a 10% solution of triethylaluminum in pentane. The results of the polymerization are shown in the table below.

### Example 14

### 14a. Preparation of the solution

A 50 mL bottle equipped with a magnetic stirrer was charged with 8.4 mL of heptane and 0.92 mL of 1-butanol. 3.0 mL of a 10% solution of triethylaluminum in pentane was added at room temperature during 30 min. 0.290 mL of titaniumtetrabutoxide was added to the solution and thereafter 2.88 mL of a 20 wt% solution of butyloctylmagnesium in heptane at a temperature of 5°C during 20 min. As result a homogenous solution was obtained.

### 14b. Impregnation of the solution to the carrier

A sealed 50 mL bottle equipped with a magnetic stirrer was charged with 2.0 g of silica treated with hexamethyldisilazane according to step A, and with 8 mL of pentane. The solution prepared according to step 14a was added and the slurry was stirred at room temperature for 15 min before drying for 2.5 hrs by purging with a stream of nitrogen, during which time the temperature was raised in steps to 80°C. As result a dry free flowing white powder was obtained.

### 14c. Chlorination step

A sealed 30 mL bottle equipped with a magnetic stirrer was charged with 0.50 g of the powder prepared according to step 14b, and with 4.0 mL of pentane. 2.83 mL of ethylaluminumsesquichloride was added and the slurry was stirred at room temperature for 2 hrs. Thereafter the solvent was removed during 1.5 hrs by purging with a stream of nitrogen, during which time the temperature was raised in steps to 80°C. As result a free flowing pale orange-brown powder was obtained. Elemental analysis of the powder revealed 7.8 % Al, 11.8 % Cl, 1.6 % Mg and 1.1 % Ti.

### 14d. Test polymerization

Ethylene was polymerized according to the procedure described above in step I using 50 mg of the powder prepared according to step 14c and as a co-catalyst 2.5 mL of a 10% solution of triethylaluminum in pentane. The results of the polymerization are shown in the table below.

### Example 15

### 15a. Preparation of the solution

A 50 mL bottle equipped with a magnetic stirrer was charged with 4.0 mL of a 20 wt% solution of tetraisobutylaluminumoxane in heptane, and 0.915 mL of 1-butanol was added at room temperature during 30 min. 0.343 mL of titaniumtetrabutoxide was added to the solution and thereafter 3.65 mL of a 20 wt% solution of butyloctylmagnesium in heptane at a temperature of 5°C during 20 min. As result a homogenous solution was obtained.

### 15b. Impregnation of the solution to the carrier

A sealed 50 mL bottle equipped with a magnetic stirrer was charged with 2.0 g of silica treated with hexamethyldisilazane according to step C, and with 8 mL of pentane. The solution prepared according to step 15a was added and the slurry was stirred at room temperature for 1 hr before drying for 3.5 hrs by purging with a stream of nitrogen, during which time the temperature was raised in steps to 105°C. As result a dry free flowing pale green powder was obtained.

### 15c. Chlorination step

A sealed 30 mL bottle equipped with a magnetic stirrer was charged with 0.50 g of the powder prepared according to step 15b, and with 4.0 mL of pentane. 3.61 mL of ethylaluminumsesquichloride was added and the slurry was stirred at room temperature for 2 hrs. Thereafter the solvent was removed during 2 hrs 10 min by purging with a stream of nitrogen, during which time the temperature was raised in steps to 80°C. As result a free flowing pale orange-brown powder was obtained. Elemental analysis of the powder revealed 8.8 % Al, 15.5 % Cl, 1.5 % Mg and 1.0 % Ti.

### 15d. Test polymerization

Ethylene was polymerized according to the procedure described above in step I using 50 mg of the powder prepared according to step 15c and as a co-catalyst 2.5 mL of a 10% solution of triethylaluminum in pentane. The results of the polymerization are shown in the table below.

### Example 16

### 16a. Preparation of the solution

A 50 mL bottle equipped with a magnetic stirrer was charged with 3.56 mL of a 10% solution of triethylaluminum in pentane and 0.82 mL of 1-butanol was added at room temperature during 30 min. 0.343 mL of titaniumtetrabutoxide was added to the solution and thereafter 3.43 mL of a 20 wt% solution of butyloctylmagnesium in heptane at a temperature of 5°C during 20 min. As result a homogenous solution was obtained.

### 16b. Impregnation of the solution to the carrier

A sealed 50 mL bottle equipped with a magnetic stirrer was charged with 2.0 g of silica treated with hexamethyldisilazane according to step A, and with 8 mL of pentane. The solution prepared according to step 16a was added and the slurry was stirred at room temperature for 1 hr before drying for 3.5 hrs by purging with a stream of nitrogen, during which time the temperature was raised in steps to 100°C. As result a dry free flowing white powder was obtained.

### 16c. Chlorination step

A sealed 30 mL bottle equipped with a magnetic stirrer was charged with 0.50 g of the powder prepared according to step 16b, and with 4.0 mL of pentane. 2.88 mL of ethylaluminumdichloride was added and the slurry was stirred at room temperature for 2 hrs. The solvent was removed thereafter during 1 hr 15 min by purging with a stream of nitrogen, during which time the temperature was raised in steps to 100°C. As result a free flowing pale orange-brown powder was obtained. Elemental analysis of the powder revealed 7.5 % Al, 18.2 % Cl, 1.5 % Mg and 1.1 % Ti.

### 16d. Test polymerization

Ethylene was polymerized according to the procedure described above in step I using 30 mg of the powder prepared according to step 16c and as a co-catalyst 1.5 mL of a 10% solution of triethylaluminum in pentane. The results of the polymerization are shown in the table below.

### Example 17

### 17a. Chlorination step

A sealed 30 mL bottle equipped with a magnetic stirrer was charged with 0.50 g of the powder prepared according to step 16b, and with 4.0 mL of pentane. 1.44 mL of ethylaluminumdichloride was added and the slurry was stirred at room temperature for 2 hrs. Thereafter the solvent was removed during 1 hr 15 min by purging with a stream of nitrogen, during which time the temperature was raised in steps to 100°C. As result a free flowing pale orange-brown powder was obtained. Elemental analysis of the powder revealed 3.9 % Al, 11.1 % Cl, 1.2 % Mg and 1.1 % Ti.

### 17d. Test Polymerization

Ethylene was polymerized according to the procedure described above in step I using 33 mg of the powder prepared according to step 17a and as a co-catalyst 1.7 mL of a 10% solution of triethylaluminum in pentane. The results of the polymerization are shown in the table below.

### Example 18

### 18a. Preparation of the solution

A 50 mL bottle equipped with a magnetic stirrer was charged with 5.34 mL of a 10% solution of triethylaluminum in pentane, and with 3.43 mL of a 20% solution of butyloctylmagnesium in heptane. 0.70 mL of ethanol was added at room temperature during 30 min. 0.343 mL of titaniumtetrabutoxide was thereafter added to the solution at a temperature of 5°C during 20 min. As result a homogenous solution was obtained.

### 18b. Impregnation of the solution to the carrier

A sealed 50 mL bottle equipped with a magnetic stirrer was charged with 2.00 g of silica treated with hexamethyldisilazane according to step A, and with 8 mL of pentane. The solution prepared according to step 18a was added and the slurry was stirred at room temperature for 15 min before drying for 2.5 hrs by purging with a stream of nitrogen, during which time the temperature was raised in steps to 80°C. As result a dry free flowing white powder was obtained.

### 18c. Chlorination step

A sealed 30 mL bottle equipped with a magnetic stirrer was charged with 0.50 g of the powder prepared according to step 18b. 3.03 mL of a 10% solution of ethylaluminumdichloride in pentane was added and the slurry was stirred at room temperature for 2 hrs. Thereafter solvent was removed during 1.5 hrs by purging with a stream of nitrogen, during which time the temperature was raised in steps to 80°C. As result a free flowing pale orange-brown powder was obtained. Elemental analysis of the powder revealed 7.1 % Al, 16.5 % Cl, 1.7 % Mg and 1.1 % Ti.

### 18d. Test Polymerization

Ethylene was polymerized according to the procedure described above in step I using 49 mg of the powder prepared according to step 18c and as a co-catalyst 2.45 mL of a 10% solution of triethylaluminum in pentane. The results of the polymerization are shown in the table.

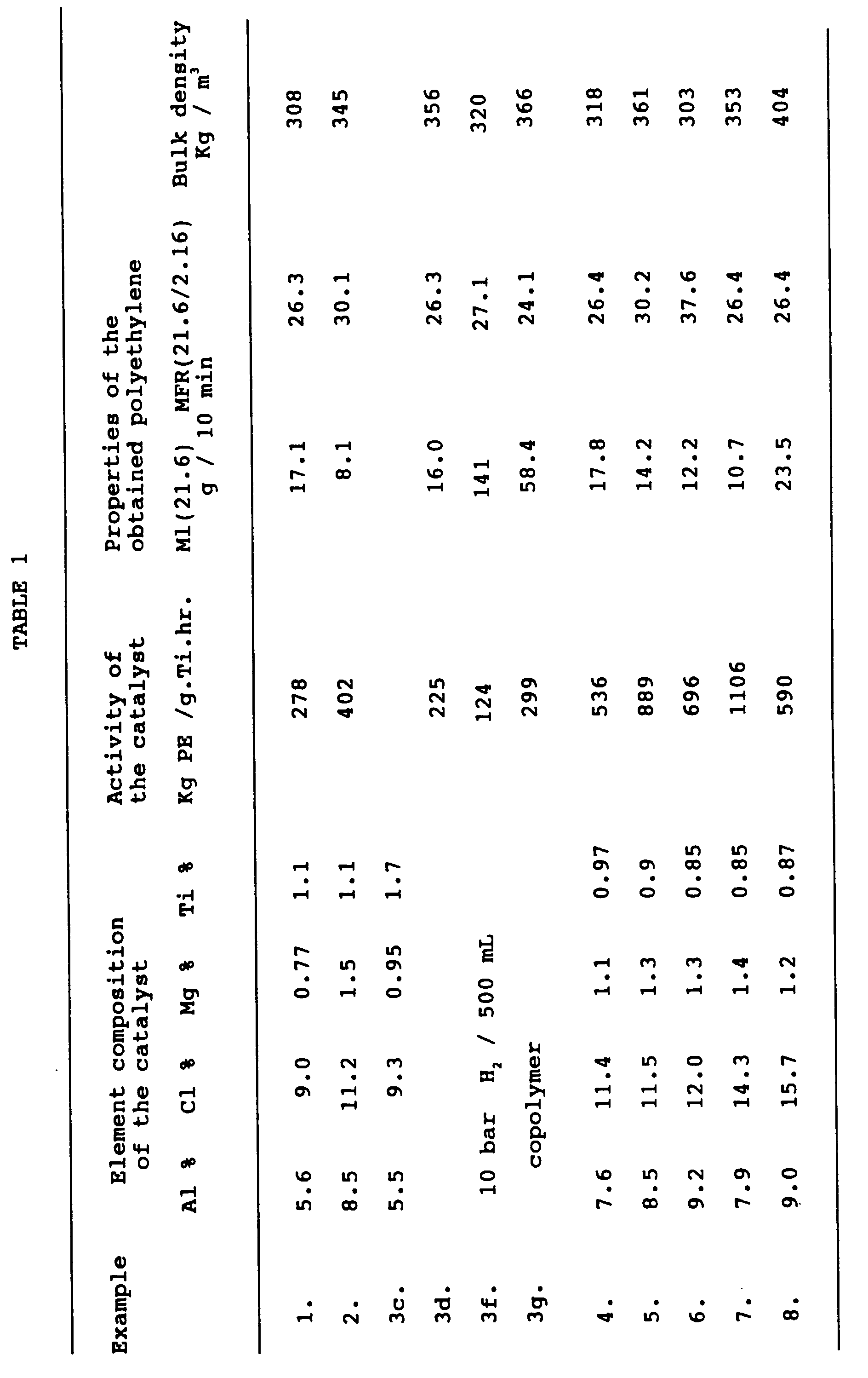

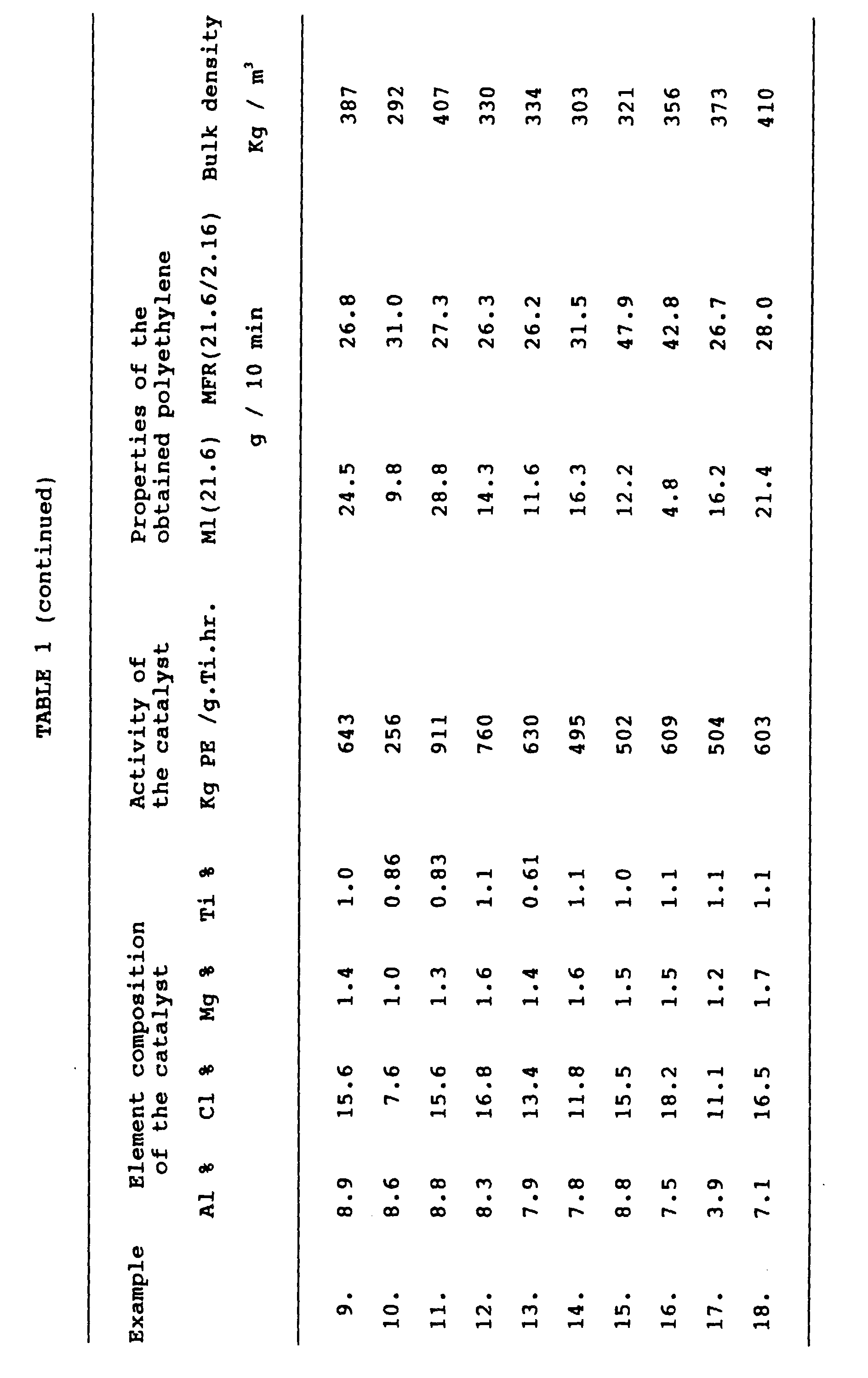

## Claims

1. Process for the preparation of a procatalyst composition for polymerization of olefins, said process comprising application of a metal-containing complex compound or mixture of compounds to a porous particulate carrier and chlorination of the same with a suitable chlorination agent, characterized in that magnesium or a compound thereof, titanium compound, aluminum or a compound thereof, and a compound having a hydroxyl group are reacted with each other so that an alkoxide or alkylalkoxide solution containing the said metals in an inert solvent is obtained, which solution is in a single step impregnated into the carrier, whereafter the extra solvent is removed, and the impregnated carrier thus obtained is treated with the said suitable chlorination agent.

2. A process according to claim 1, characterized in that the carrier is an inorganic oxide which has been treated for removal of free hydroxyl groups before the impregnation.

3. A process according to claim 2, characterized in that the carrier is a dehydrated silica which has been reacted with a compound which removes hydroxyl groups.

4. A process according to claim 3, characterized in that the carrier is dehydrated and calcinated silica which has been reacted with a suitable silicon compound such as hexamethyldisilazane, or an aluminum compound such as triethylaluminum for the removal of hydroxyl groups.

5. A process according to any one of the preceding claims, characterized in that the magnesium compound is an organic magnesium compound, suitably an magnesiumalkyl such as butyloctylmagnesium, that the titanium compound is a titanium alkoxide such as Ti (OBu)₄, that the aluminum compound is an organic aluminum compound, suitably an aluminumalkyl such as a triethylaluminum, or an aluminumoxane such as tetraisobutylaluminumoxane and that the compound comprising a hydroxyl group is an alcohol such as ethanol or 1-butanol.

6. A process according to any one of the preceding claims, characterized in that the inert solvent is a hydrocarbon.

7. A process according to any one of the preceding claims, characterized in that the solvent is removed after the impregnation step by evaporation.

8. A process according to any one of the preceding claims, characterized in that the impregnated carrier particles are chlorinated with a suitable organic aluminum chloride.

9. Process for the polymerization or copolymerization of olefins such as ethylene comprising preparation of a procatalyst composition according to any one of the preceding claims and the use of the procatalyst composition as obtained, together with a cocatalyst such as an organic aluminum compound, at the polymerization or copolymerization step.

## Patentansprüche

1. Verfahren zur Darstellung einer prokatalytischen Zusammensetzung für die Polymerisation von Olefinen, wobei der besagte Prozeß eine Hinzufügung einer metall- enthaltenden Komplex- Verbindung oder einer Mischung von Verbindungen auf einen porösen, aus Partikeln bestehenden Träger und eine Chlorierung desselben mit einem passenden Chlorierungsmittel aufweist, **dadurch charakterisiert daß**, Magnesium oder eine Verbindung davon, eine Titanverbindung, Aluminium oder eine Verbindung davon, und eine Verbindung aufweisend eine Hydroxyl- Gruppe jeweils miteinander in Reaktion gebracht werden, so daß eine alkoxide oder eine alkylalkoxide Lösung, die besagte Metalle in einem inerten Lösungsmittel enthält, erhalten wird, wobei der Träger mit dieser Lösung in einem einzigen Schritt getränkt wird, wonach das überschüssige Lösungsmittel entfernt wird, und der dergestalt erhaltene getränkte Träger mit dem besagten passenden Chlorierungsmittel behandelt wird.

2. Ein Verfahren gemäß Anspruch 1, **gekennzeichnet dadurch daß**, der Träger ein anorganisches Oxid ist, das für die Enfernung von freien Hydroxyl-Gruppen vor der Tränkung behandelt wurde.

3. Ein Verfahren gemäß Anspruch 2, **dadurch gekennzeichnet daß**, der Träger ein dehydriertes Siliziumdioxid ist, das mit einer Verbindung in Reaktion gebracht wurde, die die Hydroxyl- Gruppen entfernt.

4. Ein Verfahren entsprechend Anspruch 3, **dadurch gekennzeichnet daß**, der Träger ein dehydriertes und calziniertes Siliziumdioxid ist, das mit einer passenden Silizium-Verbindung wie 1,1,1,3,3,3-Hexamethylsilazan in Reaktion gebracht wurde, oder eine Aluminium-Verbindung wie Triethylaluminium für die Entfernung der Hydroxyl-Gruppen.

5. Ein Verfahren gemäß irgendeinem der vorhergehenden Ansprüche, **dadurch gekennzeichnet daß**, die Magnesium- Verbindung eine organische Magnesium- Verbindung ist, passend ein Magnesiumalkyl wie Butyloctylmagnesium, daß die Titan- Verbindung ein Titanalkoxid wie Ti (OBu)₄ ist, daß die Aluminium- Verbindung eine organische Aluminium-Verbindung ist, passend ein Aluminiumalkyl wie ein Triethylaluminium, oder ein Aluminiumoxan wie Tetraisobutylaluminiumoxan, und daß die Verbindung, die Hydroxyl- Gruppen enthält, ein Alkohol wie Ethanol oder 1-Butanol ist.

6. Ein Verfahren gemäß irgendeinem der vorstehenden Ansprüche, **dadurch gekennzeichnet daß**, das inerte Lösungsmittel ein Kohlenwasserstoff ist.

7. Ein Verfahren gemäß irgendeinem der vorstehenden Ansprüche, **dadurch gekennzeichnet daß**, die Lösung nach dem Tränkungsschritt durch Verdunsten entfernt wird.

8. Ein Verfahren gemäß irgendeinem der vorstehenden Ansprüche, **dadurch gekennzeichnet daß**, die getränkten Partikel des Trägers mit einem passenden organischen Aluminiumchlorid chloriert werden.

9. Verfahren zur Polymerisation oder Co- Polymerisation von Olefinen wie Ethylen aufweisend eine Darstellung einer prokatalytischen Zusammensetzung entsprechend irgendeinem der vorstehenden Ansprüche und die Verwendung der prokatalytischen Zusammensetzung wie erhalten, zusammen mit einem Co- Katalysator wie einer organischen Aluminium-Verbindung während des Polymerisations- oder Co- Polymerisationsschrittes.

## Revendications

1. Procédé pour la préparation d'une composition procatalytique pour la polymérisation d'oléfines, ledit procédé comprenant l'application d'un composé ou d'un mélange de composés complexes contenant du métal à un véhicule particulaire poreux et la chloration de celui-ci avec un agent de chloration approprié, caractérisé en ce que du magnésium ou un de ses composés, un composé du titane, de l'aluminium ou un de ses composés, et un composé ayant un groupe hydroxyle sont mis à réagir les uns avec les autres de sorte à obtenir une solution d'alcoolate ou d'alkylalcoolate contenant lesdits métaux dans un solvant inerte, solution qui est imprégnée en une simple étape dans le véhicule, après quoi le solvant en excès est retiré, et le véhicule imprégné ainsi obtenu est traité avec ledit agent de chloration approprié.

2. Procédé selon la revendication 1, caractérisé en ce que le véhicule est un oxyde inorganique que l'on a traité pour éliminer les groupes hydroxyle libres avant l'imprégnation.

3. Procédé selon la revendication 2, caractérisé en ce que le véhicule est une silice déshydratée que l'on a fait réagir avec un composé qui élimine les groupes hydroxyle.

4. Procédé selon la revendication 3, caractérisé en ce que le véhicule est une silice déshydratée et calcinée que l'on a fait réagir avec un composé de silicium approprié tel que l'hexaméthyldisilazane, ou un composé de l'aluminium tel que le triéthylaluminium pour l'élimination des groupes hydroxyle.

5. Procédé selon l'une quelconque des revendications précédentes, caractérisé en ce que le composé du magnésium est un composé organomagnésien, de façon appropriée un alkylmagnésium tel que le butyloctylmagnésium, que le composé du titane est un alcoolate de titane tel que Ti(OBu)₄, que le composé de l'aluminium est un composé organoaluminique, de façon appropriée un alkylaluminium tel que le triéthylaluminium, ou un aluminoxane tel que le tétraisobutylaluminoxane et que le composé comprenant un groupe hydroxyle est un alcool tel que l'éthanol ou le 1-butanol.

6. Procédé selon l'une quelconque des revendications précédentes, caractérisé en ce que le solvant inerte est un hydrocarbure.

7. Procédé selon l'une quelconque des revendications précédentes, caractérisé en ce que le solvant est éliminé par évaporation après l'étape d'imprégnation.

8. Procédé selon l'une quelconque des revendications précédentes, caractérisé en ce que les particules de véhicule imprégnées sont chlorées avec un chlorure organoaluminique approprié.

9. Procédé pour la polymérisation ou la copolymérisation d'oléfines tel que l'éthylène comprenant la préparation d'une composition procatalytique selon l'une quelconque des revendications précédentes et l'utilisation de la composition procatalytique obtenue, conjointement avec un cocatalyseur tel qu'un composé organoaluminique, à l'étape de polymérisation ou de copolymérisation.
